# EUROPÄISCHE PATENTSCHRIFT

(11) **EP 3 299 345 B1**
(45) Veröffentlichungstag und Bekanntmachung des Hinweises auf die Patenterteilung: **06.03.2019**
(21) Anmeldenummer: 16190056.8
(22) Anmeldetag: 22.09.2016
(51) Int. Cl.: C03B 37/014, C03B 19/14, C03B 20/00

(54) **VERFAHREN ZUR HERSTELLUNG EINES OPTISCHEN ROHLINGS AUS SYNTHETISCHEM QUARZGLAS**
METHOD FOR PRODUCING AN OPTICAL BLANK FROM SYNTHETIC QUARTZ GLASS
PROCEDE DE FABRICATION D'UNE EBAUCHE OPTIQUE EN VERRE DE QUARTZ SYNTHETIQUE

(43) Veröffentlichungstag der Anmeldung: 28.03.2018
(73) Patentinhaber: Heraeus Quarzglas GmbH & Co. KG, 63450 Hanau (DE)
(72) Erfinder: KASKE, Andreas, 63486 Bruchkoebel (DE); BECKER, Klaus, 63452 Hanau (DE); OCHS, Stefan, 63571 Gelnhausen (DE)
(74) Vertreter: Staudt, Armin Walter

(56) Entgegenhaltungen:
- WO-A1-2009/090257
- DE-A1-102006 024 831
- JP-A- H05 270 848
- JP-A- 2001 199 733
- JP-A- 2004 123 439

## Beschreibung

### Technischer Hintergrund

Die vorliegende Erfindung betrifft ein Verfahren zur Herstellung eines optischen Rohlings aus synthetischen Quarzglas durch Verglasen und Umformen eines porösen, eine Längsachse aufweisenden, zylinderförmigen SiO₂ Sootkörpers in einer eine Schmelzform mit Bodenplatte aufweisende Erhitzungszone, umfassend folgende Verfahrensschritte:
(a) Verglasen des SiO₂₋Sootkörpers in der Erhitzungszone bei einer Verglasungstemperatur unter Bildung eines vollzylindrischen, vollständig verglasten, transparenten Quarzglas-körpers, und unmittelbar anschließend
(b) Umformen des verglasten Quarzglaskörpers durch Erweichen in der Schmelzform unter Bildung einer viskosen Quarzglasmasse, welche das Volumen der Schmelzform ganz oder teilweise ausfüllt, und
(c) Abkühlen der Quarzglasmasse und Entnahme aus der Schmelzform unter Bildung des optischen Rohlings.

Aus dem Rohling aus synthetischem Quarzglas werden beispielsweise Bauteile zum Einsatz in der Halbleiterfertigung, optische Bauteile, wie Linsen oder Spiegel in der Mikrolithographie, oder Vorformen für optische Fasern für die Nachrichtentechnik gefertigt.

Die Herstellung von synthetischem Quarzglas erfolgt in der Regel durch Flammenhydrolyse oder Oxidation einer siliziumhaltigen Ausgangsverbindung unter Einsatz von Abscheidebrennern. Eine bewährte Ausgangssubstanz für die Herstellung von synthetischem Quarzglas, ist Siliziumtetrachlorid (SiCl₄). Es ist aber auch eine Vielzahl anderer siliziumorganischer Verbindungen bekannt, aus denen durch Hydrolyse oder durch Oxidation SiO₂ gebildet werden können. Als Beispiel seien chlorhaltige oder chlorfreie Silane, Silazane oder Polysiloxane genannt. Davon hat sich insbesondere das chlorfreie Polysiloxan Octamethylcyclotetrasiloxan (OMCTS) bewährt.

Bekannte Herstellungsverfahren sind das VAD-Verfahren (Vapor Phase Axial Deposition), das OVD Verfahren (Outside Vapor Phase Deposition) oder plasmaunterstütze Abscheideverfahren, wie das POD Verfahren (Plasma Outside Deposition). Bei anderen Verfahren werden Formen verwendet, in denen Quarzglaskörper durch vertikale Abscheidung von Si02-Partikeln und direktem Verglasen von unten nach oben aufgebaut werden. Bei allen diesen Verfahrensweisen werden mittels eines oder mehrerer Abscheidebrenner Si02-Partikel erzeugt und schichtweise auf einem Träger abgeschieden, der sich relativ zu einer Brennerflamme bewegt. Bei hinreichend hoher Temperatur im Bereich der Trägeroberfläche kommt es zu einem unmittelbaren Verglasen der Si02-Partikel ("Direktverglasen"). Im Unterschied dazu ist bei dem sogenannten "Sootverfahren" die Temperatur während des Abscheidens der Si02-Partikel so niedrig, dass ein poröser Si02-Sootkörper erhalten wird, der in einem separaten Verfahrensschritt zu transparentem Quarzglas gesintert bzw. verglast wird. Sowohl das Direktverglasen als auch das Sootverfahren führen letztlich zu einem dichten, transparenten, hochreinen, synthetischen Quarzglas. Die vorliegende Erfindung betrifft die Herstellung von synthetischem Quarzglas über das Zwischenstadium des Sootkörpers.

In der Regel enthalten die Si02-Sootkörper herstellungsbedingt einen hohen Gehalt an Hydroxylgruppen (OH-Gruppen). Diese wirken sich auf die optische Transmission des daraus erhaltenen Quarzglases aus und sie haben Einfluss auf die Viskosität des Quarzglases und seine Beständigkeit gegenüber kurzwelliger UV-Strahlung. Daher wird bei der Herstellung von synthetischem Quarzglas im Allgemeinen auf die Einhaltung eines vorgegebenen Gehalts an Hydroxylgruppen geachtet, und es sind eine Vielzahl von Methoden vorgeschlagen geworden, den Hydroxylgruppengehalt im Sootkörper zu minimieren oder auf einen vorgegebenen Wert einzustellen. So wird beispielsweise der poröse Sootkörper einer Dehydratationsbehandlung in einer chlorhaltigen Atmosphäre bei hoher Temperatur um 1000°C unterzogen, wobei es zu einer Substitution von OH-Gruppen durch Chlor kommt. Alternativ kann die Trocknung des Sootkörpers auch in einer Fluor enthaltenden Atmosphäre durchgeführt werden, was mit einer Fluor-Dotierung einhergeht. Wenn der Einbau von Chlor oder Fluor in das SiO₂-Netzwerk vermieden werden soll, wird eine thermische Trocknung durchgeführt, bei der der Sootkörper bei einer Temperatur von etwa 1100 °C in einem Heizofen mit einem Heizelement aus Grafit unter Vakuum dehydriert wird.

Aus dem vorbehandelten Sootkörper wird durch Sintern (=Verglasen) ein Körper aus transparentem Quarzglas hergestellt. In der Regel wird hierzu der getrocknete oder anderweitig vorbehandelte Sootkörper in einen evakuierbaren Verglasungsofen eingebracht und darin unter Bildung eines transparenten Quarzglaskörpers gesintert. Anschließend wird der verglaste Quarzglaskörper durch mechanische Formgebung oder durch Heißverformung in die vorgegebene Endform des Rohlings oder Halbzeugs gebracht.

Die Heißverformung geht häufig mit Homogenisierungsmaßnahmen zur Verminderung von Schlieren und Schichten einher. So wird beispielsweise in der DE 42 04 406 A1 ein mehrstufiger Verformungsprozess vorgeschlagen, bei dem ein Drillstab aus Quarzglas zur Beseitigung einer axialen Schichtstruktur in einer Gießform aus Graphit eingebracht wird, die in Form eines umgedrehten "T" ausgebildet ist, mit vertikal orientiertem Zufuhrstutzen, der an seinem unteren Ende zweiseitig in eine horizontal orientierte, rohrförmige Auslaufform mit quadratischem Querschnitt verzweigt. Der Drillstab erweicht innerhalb des Zufuhrstutzens und sinkt dabei unter seinem eigenen Gewicht so in die horizontale Auslaufform ein, dass er zu einem stabförmigen Quarzglaszylinder mit quadratischem Querschnitt umgeformt wird, bei dem die verbleibenden Schichten parallel zur Stab-Längsachse verlaufen und durch Verdrillen um die Längsachse leicht entfernt werden können.

### Stand der Technik

In der DE 100 41 467 C1 wird vorgeschlagen, die Dehydratationsbehandlung und das Verglasen des Sootkörpers in einem gemeinsamen Ofen durchzuführen und beim Verglasen des Sootkörpers gleichzeitig auch die Endform des Rohlings durch plastisches Umformen einzustellen. In einem Ausführungsbeispiel wird eine gasdurchlässige Grafitform eingesetzt, die einen oberen Bereich mit einer an den Außendurchmesser des Sootkörpers, hier ein Hohlzylinder, angepassten Aufnahme mit weitem Querschnitt aufweist, welcher über einen trichterförmigen Übergang in einen unteren Bereich mit engerem Querschnitt übergeht. Der untere Bereich der Grafitform ist dem Außendurchmesser des herzustellenden Quarzglas-Halbzeugs angepasst und bestimmt dessen Endform. Der zu verglasende Sootkörper wird in den Aufnahmebereich der Grafitform eingesetzt, wobei zur Stabilisierung des Sootkörpers ein Haltestab mit einem Teller in die Längsbohrung des Sootkörpers eingeführt ist. In dieser Art wird der Sootkörper zunächst in einem oberen, kälteren Bereich eines Ofens gehalten und dort mit Chlorgas beaufschlagt. Die Temperatur während der Chlorbehandlung beträgt etwa 950 °C. Nach diesem Prozessschritt wird der Sootkörper zusammen mit der Grafitform in Ofenbereiche mit höherer Temperatur um 1350 °C abgesenkt und während einer Zeitspanne von etwa 12 h in Heliumatmosphäre vorgesintert. Beim Vorsintern wird eine gewisse Volumenkontraktion des Sootkörpers beobachtet. Danach erfolgt das Verglasen des Sootkörpers bei einer Temperatur von etwa 1750 °C, indem die Grafitform inklusive des vorgesinterten Sootkörpers ein weiteres Stück in Richtung des Ofenbereichs mit noch höherer Temperatur abgesenkt wird. Nach einer Verweilzeit von 8 Stunden in dieser Position erweicht der vorgesinterte, hohlzylindrische Sootkörper soweit, dass er unter seinem eigenen Gewicht durch den trichterförmigen Übergang in den unteren Teil der Form abfließt. Das zähe Abfließen kann durch Druck von oben unterstützt werden. Nach dem Erkalten wird die Grafitform geöffnet und ein Quarzglas-Formkörper entnommen, der ohne weitere Nachbearbeitung als blockförmiges Halbzeug für die Herstellung von Quarzglas-Bauteilen für die Optik oder für die Halbleiterfertigung einsetzbar ist.

Beim Abfließen der viskosen SiO₂-Masse in den unteren Bereich der Grafitform kann es jedoch unvorhersehbar zu Blaseneinschlüssen oder Verwerfungen kommen, die sich als Schlieren oder Blasennester zeigen. Derartige Einschmelzfehler wirken sich auf die Qualität des Endprodukts ungünstig aus. So verringern Blasen beispielsweise die Beständigkeit von Quarzglas-Bauteilen gegenüber Ätzprozessen, wie sie in der Halbleiterfertigung üblich sind. Auch beim Einsatz in der Mikrolithographie machen derartige Einschmelzfehler das Halbzeug unbrauchbar und sie müssen aufwändig entfernt werden. Abgesehen davon ist das bekannte Verfahren nur für hohlzylindrische Sootkörper geeignet, bei denen die Längsbohrung zur Einführung einer Zentriervorrichtung genutzt wird. Durch die Zentriereinrichtung resultiert nach dem Umformen ein Quarzglas-Hohlzylinder mit einer Bohrung, die einen Durchmesser von etwa 50 bis 80 mm aufweist.

Auch in DE 10 2006 024 831 A1 wird vorgeschlagen, das Verglasen des Sootkörpers und das Umformen zu einem Rohling in einem gemeinsamen Ofen durchzuführen. Jedoch erfolgt das Verglasen und Umformen nicht gleichzeitig, sondern in auf einander folgenden Verfahrensschritten.

Es wird von einem hohlzylindrischen Sootkörper ausgegangen, der mittels eines üblichen OVD-Verfahrens durch Außenabscheidung von SiO₂-Partikeln auf einem um seine Längsachse rotierenden Dorn hergestellt wurde. Der Sootkörper wird in seiner Längsbohrung von einem Haltestab oder Trägerrohr gestützt und sitzt auf einer Bodenplatte einer Schmelzform auf. Das Trägerrohr dient somit nicht nur als Halterung, sondern wirkt insbesondere als formgebendes Element für die zu erzeugende Innenbohrung des herzustellenden Rohlings. In dieser Anordnung wird der Sootkörper dem Verglasungs- und Umformofen zugeführt. In der Heizzone des Ofens verglast der Sootkörper von oben beginnend kontinuierlich durch, dann beginnt die Umformung durch Verformung des unteren Bereichs des verglasten Quarzglaskörpers in der Schmelzform. Nach und nach erweicht der Quarzglaskörper insgesamt und fließt in die Schmelzform aus. Durch den Verbleib des Trägerrohres während der Verglasung und Umformung entsteht ein hohlzylindrischer Formkörper als Rohling.

Das Verfahren gemäß DE 10 2006 024 831 A1 ist ebenso wie das vorher beschriebene Verfahren gemäß DE 100 41 467 C1 auf die Herstellung hohlzylindrischer Rohlinge beschränkt. Das Trägerrohr wird zwar als Zentriereinrichtung genutzt, es sind jedoch weitere Maßnahmen wie etwa ein möglichst geringer Spalt (maximal 50 mm) zwischen Schmelzform-Innenwandung und der Außenwandung des Sootkörpers bzw. des gesinterten Quarzglaskörpers erforderlich, um eine verzögerte Wärmeübertragung und insbesondere um Verwerfungen beim Umformprozess zu vermeiden. Da überdies während des Verglasens darauf geachtet werden muss, dass der Quarzglaskörper nicht auf das Trägerrohr aufschrumpft, mindert der Spalt zwischen Trägerrohr und Quarzglaskörper die Zentrierwirkung des Trägerstabes beim Umformen. Es kann deshalb selbst bei exakter Zentrierung des Trägerrohres zu Abweichungen von einer zentrischen Ausrichtung des Quarzglaskörpers in der Schmelzform kommen. Ein Nachsteuern des Trägerrohrs bei Korrekturbedarf ist nicht vorgesehen. Insofern ist die Funktion des Trägerrohrs als Zentriereinrichtung nicht ausreichend, um den verglasten Quarzglaskörper in einer zentrierten Position zu halten und einen gesteuerten Umformvorgang zu gewährleisten. Darüber hinaus kann es zu Einschmelzfehlem durch Blaseneinschlüsse kommen, wenn der Verglasungsvorgang des Sootkörpers von oben nach unten fortschreitend unbemerkt doch am unteren Ende des Sootkörpers nicht vollständig ist und dieser Bereich sogleich dem Umformvorgang in der Schmelzform unterworfen wird.

Es ist weiterhin aus JP 2004-123439 A das Verglasen eines vollzylindrischen SiO₂-Sootkörpers, der mittels des VAD-Verfahrens hergestellt wurde, bekannt. In einer Ausführungsform wird der Sootkörper an einer Hängevorrichtung fixiert in einen Ofen gefahren, wobei eine Schmelzform von unten unter erhöhtem Druck auf den Sootkörper einwirkt. Bei einem Druck von 10 000 Pa und bei einer Temperatur von 1300°C bildet sich ein transparenter Quarzglaskörper. Es folgt eine weitere Temperatursteigerung auf 1600°C bei einem Druck von 0,2 MPa, was zur Erweichung und Umformung des Quarzglaskörpers in der Schmelzform führt. Die Mitte der Schmelzform ist auf die Hängevorrichtung ausgerichtet.

Auch aus JP 2001-199733 A ist die Herstellung eines Quarzglaskörpers mit Verglasen und Umformen eines SiO₂₋Sootkörpers bekannt, hier allerdings in einem einzigen Verfahrensschritt. In diesem Fall liegt der Sootkörper auf dem Rand einer Form auf und fließt bei einer Temperatur von 1750°C bis 1800°C unter seinem Eigengewicht in die Form aus.

Eine ähnliche Verfahrensweise wie bei JP 2001-199733 A ist auch gemäß JPH05-270848 A vorgesehen. Der SiO₂-Sootkörper an einer Halterung hängend in einen Ofen eingeführt und dort stufenweise auf bis zu 1850°C erhitzt. Der sich bildende transparente Quarzglaskörper erweicht dabei soweit, dass er in eine im unteren Bereich des Ofens plazierte Form einfließt.

### Technische Aufgabenstellung

Der Erfindung liegt daher die Aufgabe zugrunde, ein Verfahren zum Verglasen und Umformen von SiO₂-Sootkörpern anzugeben, wodurch vollzylindrische Rohlinge aus synthetischem Quarzglas mit reproduzierbar guter Qualität, hoher Reinheit und homogenen, rotations-symmetrischen Eigenschaftsprofilen, wie beispielsweise das Brechzahlprofil, erhalten werden.

### Allgemeine Beschreibung der Erfindung

Diese Aufgabe wird ausgehend von dem Verfahren der eingangs genannten Gattung erfindungsgemäß dadurch gelöst, dass beim Umformen in der Schmelzform gemäß Verfahrensschritt (b) der vollzylindrische Quarzglaskörper durch gesteuertes Zuführen mit einem Zentrierungsmittel der Bodenplatte in Kontakt gebracht wird.

Beim erfindungsgemäßen Verfahren wird von einem Sootkörper ausgegangen, der nach dem Trocknen in einer gemeinsamen Ofenanlage verglast und anschließend in einer Schmelzform zu dem Rohling aus synthetischem Quarzglas umgeformt wird. Es wird beim Verglasen des SiO₂₋Sootkörpers ein vollzylindrischer Quarzglaskörper gebildet, der rotations-symmetrische Eigenschaftsprofile aufweist. Vorzugsweise ist der Sootkörper mittels des VAD-Verfahrens als ein vollzylindrischer Formkörper aufgebaut worden und weist ein rotations-symmetrisches Eigenschaftsprofil auf. Von diesem Körper ausgehend erfolgt die Herstellung von entsprechenden vollzylindrischen Rohlingen aus synthetischem Quarzglas. Das Verglasen und Umformen in einem einzigen Ofen gewährleistet einen effektiven Herstellungsprozess ohne Zwischenlagerung oder Transporte und erfüllet somit die hohen Anforderungen in Bezug auf die Reinheit des synthetischen Quarzglases für den Einsatz in der Optik oder als Prozess-Bauteil in der Halbleiterindustrie.

Weiterhin wird beim Erweichen des verglasten, vollzylindrischen Quarzglaskörpers in der Schmelzform in zentrierter Ausrichtung kein Haltestab wie im Stand der Technik eingesetzt, sondern das Zentrieren erfolgt durch gesteuertes Zuführen und in Kontakt bringen des Quarzglaskörpers mit einem Zentrierungsmittel an der Bodenplatte der Schmelzform. Durch das Zentrierungsmittel an der Bodenplatte der Schmelzform wird ein Verkippen des Quarzglaskörpers verhindert, so dass die Rotationssymmetrie beim Umformen erhalten bleibt und damit die homogenen rotations-symmetrischen Eigenschaftsprofile vom verglasten Quarzglaskörper auf den Rohling übertragen werden.

Es hat sich gezeigt, dass ein blasen- und schlierenfreies Umformen nur möglich ist, wenn der Sootkörper vollständig verglast wird und dann als Quarzglaskörper vorliegt. Die definierte Trennung und zeitliche Abfolge von Verglasungsvorgang und Umformprozess vermeidet Einschlüsse von Gasen, wie sie beispielsweise entstehen, wenn noch poröses Sootmaterial von zähflüssiger Quarzglasmasse umhüllt und eingeschlossen wird.

Das Umformen des Quarzglaskörpers erfolgt anschließend an das Verglasen ohne zwischenzeitliche Abkühlung in der gleichen Ofenanlage, jedoch bei einer höheren Temperatur als die Verglasungstemperatur, und durch Einführen in eine Schmelzform. Die Schmelzform hat eine Bodenplatte mit einem Zentrierungsmittel, das beim Aufsetzen des vollzylindrischen Quarzglaskörpers auf die Bodenplatte diesen dort mittig zentriert, so dass ein Verkippen oder ein Verschieben auf der Bodenplatte verhindert wird. Der vollzylindrische Quarzglaskörper hat an seinem unteren Ende keine plane Stirnfläche, sondern eine halbkugelförmige Kuppe, die sich dem Zentrierungsmittel in der Bodenplatte gut anpasst. Der Quarzglaskörper erweicht durch die erhöhte Temperatur zu einer zähflüssigen Masse, die sich in der Schmelzform verteilt und deren Innenvolumen ganz oder teilweise ausfüllt, so dass nach dem Abkühlen der Rohling aus der Schmelzform entnommen werden kann. Der so hergestellte vollzylindrische Rohling weist im Wesentlichen die gleiche rotations-symmetrische Eigenschaftsverteilung auf wie der in die Erhitzungszone zugeführte vollzylindrische Si02-Sootkörper. Durch das erfindungsgemäße Verfahren können somit Homogenisierungsmaßnahmen am Rohling, wie etwa das Verdrillen, entfallen. Außerdem entfällt ein Wechsel der Ofenanlage nach dem Verglasen wodurch das Risiko des Eintrags von Verunreinigungen minimiert ist.

Es hat sich als besonders vorteilhaft erwiesen, wenn das Zentrierungsmittel an der Bodenplatte als eine rotations-symmetrische Mulde ausgebildet ist. Eine derartige Mulde oder muldenartige Vertiefung ist zentrisch in der Bodenplatte angeordnet und passt sich optimal an das untere Ende des verglasten Quarzglaskörpers an, der eine vollzylindrische Form hat und in der Regel an seinen Enden keine gerade Stirnfläche aufweist, sondern mit einer Kuppe versehen ist, die als Gegenstück für die Mulde in der Bodenplatte fungiert. Durch diese Ausgestaltung des Zentrierungsmittels wird ein homogenes Ausfließen der erweichten Quarzglasmasse unter Beibehaltung von rotations-symmetrischen Eigenschaftsprofilen unterstützt.

Weiterhin hat es sich im Hinblick auf eine besonders exakte Zuführung bewährt, wenn das gesteuerte Zuführen in die Schmelzform mittels einer am oberen Ende des verglasten Quarzglaskörpers angreifenden Haltevorrichtung in Kombination mit einer Bewegungseinheit erfolgt. Somit wird der verglaste Quarzglaskörper an seinem oberen Ende und an seinem unteren Ende geführt. Die Halterung am oberen Ende des Quarzglaskörpers umfasst beispielsweise eine Graphit-Kette mit einem sogenannte Handle aus Quarzglas. Die Bewegungseinheit wirkt auf die Haltevorrichtung und steuert die vertikale und radiale Bewegung des Sootkörpers in die Erhitzungszone und des Quarzglaskörpers in die Schmelzform und während des Umformens des Quarzglaskörpers.

Vorteilhafterweise umfasst die Bewegungseinheit einen Kraftaufnehmer, der die vertikale Kraft beim Aufsetzen des verglasten Quarzglaskörpers auf die Bodenplatte der Schmelzform und beim Umformen des Quarzglaskörpers in der Schmelzform registriert und eine optimale Einstellung der Zuführgeschwindigkeit ermöglicht.

Die Umformung des verglasten Quarzglaskörpers in der Schmelzform erfolgt vorteilhafterweise beginnend mit seinem unteren Ende von unten nach oben, wobei die Zuführung so gesteuert ist, dass eine pro Zeiteinheit zugeführte Masse des Quarzglaskörpers der pro Zeiteinheit erweichenden Quarzglasmasse entspricht. Durch diese Maßnahme wird der verglaste Quarzglaskörper in einer dem Grad des Umformens durch Ausfließen des erweichten Quarzglaskörpers entsprechenden Geschwindigkeit bewegt bzw. abgesenkt. Die Geschwindigkeit des Ausfließens wird dabei von der Erweichungstemperatur und der Masse des zugeführten Quarzglaskörpers bestimmt.

Nach dem Aufsitzen des Quarzglaskörpers auf der Bodenplatte der Schmelzform in zentrierter Position beginnt das Umformen durch Ausfließen. Die Halteeinrichtung aus Handle und Graphit-Kette gibt dabei gerade so viel nach, dass die gesamte Anordnung mit dem teilweise noch nicht erweichten Quarzglaskörper gestreckt bleibt und ein gleichmäßiges, rotationssymmetrisches Ausfließen der erweichten Quarzglasmasse gewährleistet ist. Es bildet sich während des Umformens zwischen dem unteren Ende des Quarzglaskörpers und der viskosen Quarzglasmasse auf einem Höhen-Niveau innerhalb der Schmelzform ein mehr oder weniger kegelförmiger Übergangsbereich aus. Dieser Übergangsbereich entspricht in etwa dem Füllstand der viskosen Quarzglasmasse in der Schmelzform oder liegt geringfügig oberhalb des Füllstands.

Der vollständig verglaste Quarzglaskörper wird zwecks Umformung mit Hilfe der Handle am oberen Ende des Quarzglaskörpers in die am unteren Ende des Ofens bzw. der Erhitzungszone befindliche Schmelzform abgesenkt, so dass er auf der Bodenplatte der Schmelzform in zentrierter Position aufsitzt. Eine Vorschubgeschwindigkeit im Bereich zwischen 2 und 5 mm/min beim in Kontaktbringen mit dem Zentrierungsmittel der Bodenplatte und Umformen hat sich bewährt. Eine Vorschubgeschwindigkeit in diesem Bereich ermöglicht ein zielgenaues in Kontakt bringen mit dem Zentrierungsmittel der Bodenplatte.

Das Umformen erfolgt vorzugsweise in einem Teilbereich der Erhitzungszone, deren Länge maximal die Hälfte der Länge des umzuformenden vollzylindrischen Quarzglaskörpers beträgt.

Zu Beginn des Umformprozesses ist dabei der obere Bereich des vollzylindrischen Quarzglaskörpers noch auf Verglasungstemperatur, so dass ein Erweichen und eine Umformung in diesem Bereich nicht stattfinden. Es erfolgt somit ein von unten beginnendes bereichsweises Erweichen des Quarzglaskörpers und es ist ein allmählich nach oben fortschreitender, definierter Umformvorgang gewährleistet. In dem Zusammenhang ist auch zu beachten, dass die zum Erweichen von Quarzglas erforderliche hohe Erweichungstemperatur auch zu einer Keimbildung und zu einem unerwünschten Wachstum von Cristobalit-Kristallen im Quarzglas führen kann. Daher wird angestrebt, das Quarzglas besonders hohen Temperaturen nur so lange wie nötig auszusetzen.

Die Erweichungstemperatur wird vorteilhafterweise im Bereich zwischen 1650 °C und 1850 °C eingestellt.

Durch die gegenüber der Verglasungstemperatur erhöhte Erweichungstemperatur im Bereich der Schmelzform erweicht der Quarzglaskörper unter Bildung einer viskosen Quarzglasmasse, welche das Volumen der Schmelzform ganz oder teilweise ausfüllt. Durch die muldenförmige Vertiefung als Zentrierungsmittel in der Bodenplatte der Schmelzform und durch die Führung (Handle, Graphit-Kette und Bewegungseinheit) am oberen Ende des Quarzglaskörpers wird ein Verkippen oder Verschieben des Quarzglaskörpers verhindert. Auf diese Weise kann das rotationssymmetrische Eigenschaftsprofil, das bei der Abscheidung des vollzylindrischen Sootkörpers angelegt wird, erhalten bleiben.

Vorzugsweise erfolgt das Umformen des vollzylindrischen Quarzglaskörpers mit im Wesentlichen konstanter Erweichungstemperatur während einer Zeitspanne von 15 min bis 200 min.

Der Umformschritt schließt sich an den Verglasungsschritt an und erfolgt bei im Wesentlichen konstanter Temperatur. Je nach Volumen des umzuformenden Quarzglaskörpers liegt die Erweichungstemperatur und die Dauer der einwirkenden Temperatur deutlich über der Verglasungstemperatur. In einer Endphase des Umformschritts ist die Umformung in die gewünschte vollzylindrische Geometrie des Rohlings im Wesentlichen abgeschlossen, es erfolgen lediglich noch Glättungen der Wandungen und der Oberseite des Rohlings, für die eine Phase im Bereich der höheren Erweichungstemperatur genügt.

Diese Maßnahme ist besonders effektiv, wenn der umgeformte Quarzglaskörper in einem möglichst homogenen Temperaturfeld gleichmäßig erhitzt wird.

In Bezug auf den zu verarbeitenden porösen Si02-Sootkörper ist es besonders vorteilhaft, wenn dieser ein vollzylindrischer Sootkörper ist, der nach dem VAD-Verfahren hergestellt wurde.

Durch schichtweises Abscheiden von Si02-Sootpartikeln auf die Stirnfläche eines rotierenden Quarzglasstabes nach dem VAD-Verfahren wird ein vollzylindrischer, eine Längsachse aufweisender Sootkörper erhalten. Dieser Sootkörper weist ein homogenes Eigenschaftsprofil auf, da die Drehzahl des Substratstabes und die Steuerung der Abscheidebrenner aufeinander abgestimmt sind. Im Vergleich zur Soot-Abscheidung mittels OVD-Verfahren, bei dem der Sootkörper auf einem Substratrohr als hohlzylindrischer Körper in seinem Durchmesser wächst, hat der Sootkörper, der nach dem VAD-Verfahren hergestellt wird, und der daraus umgeformte vollzylindrische Körper keine Eigenschaftsprofilstörung im Mittenbereich. Hinsichtlich der Herstellung eines vollzylindrischen Rohlings mit einem, homogenen, rotationssymmetrischen Eigenschaftsprofil ist das erfindungsgemäße Verfahren ein vollzylindrischer SiO₂-Sootkörper, der nach dem VAD-Verfahren hergestellt wurde, als Ausgangsmaterial von Vorteil.

Bei einer bevorzugten Ausführungsform der Erfindung wirkt beim Verglasen nach Verfahrensschritt (a) die Erhitzungszone auf den Sootkörper in vertikaler Orientierung seiner gesamten Länge ein. In diesem Fall erfährt der vollzylindrische Sootkörper die Hitzeeinwirkung an seiner gesamten Umfangsfläche. Die Verglasung erfolgt gleichmäßig radial von außen nach innen, und es kommt zu einer gewissen Volumenkontraktion, jedoch ohne dass sich das Verhältnis der Sootkörper-Abmessungen zueinander wesentlich ändert. Ebenso bleibt das Eigenschaftsprofil des Sootkörpers erhalten und überträgt sich auf den vollverglasten Quarzglaskörper.

Alternativ kann es auch vorteilhaft sein, wenn der Sootkörper in vertikaler Orientierung seiner Längsachse zonenweise mit seinem unteren Ende beginnend von unten nach oben verglast wird. Der zu verglasende Sootkörper wird zunächst von oben der Erhitzungszone zugeführt, so dass an seinem unteren Ende die Verglasung beginnt. Durch weiteres Absenken des teil-verglasten Sootkörpers durch die Erhitzungszone vergrößert sich der Verglasungsbereich weiter nach oben bis schließlich ein vollständig verglaster Quarzglaskörper vorliegt.

Das Verglasen des vollzylindrischen Sootkörpers in vertikaler Orientierung seiner Längsachse von unten nach oben muss mit einer exakt geregelten Vorschubgeschwindigkeit und Temperatureinstellung geschehen um das Risiko zu minimieren, dass in Teilbereichen des Quarzglaskörpers noch Glaseinschlüsse sind, die beim Umformen nicht mehr entfernt werden können. In diesem Zusammenhang hat es sich bewährt, wenn beim zonenweisen Verglasen mit einer Vorschubgeschwindigkeit im Bereich zwischen 2 und 10 mm/min der Sootkörper der Erhitzungszone zugeführt wird. Die Vorschubgeschwindigkeit im Bereich zwischen 2 und 10 mm/min ergibt in Verbindung mit üblichen Heizzonen-Längen von mindestens 30 cm eine Verweilzeit des Sootkörpers in der Erhitzungszone, die jedenfalls für typische Abmessungen des Sootkörpers (mit einem Außendurchmesser im Bereich von 300 mm bis 500 mm) ein vollständiges Verglasen gewährleistet.

Die Verglasungstemperatur wird vorteilhafterweise im Bereich zwischen 1200 °C und 1600 °C eingestellt. Dies gilt sowohl für das Verglasung im Ganzen wie auch für die zonenweise Verglasung.

### Ausführungsbeispiel

Nachfolgend wird die Erfindung anhand einer Patentzeichnung und eines Ausführungsbeispiels näher erläutert. Im Einzelnen zeigt:

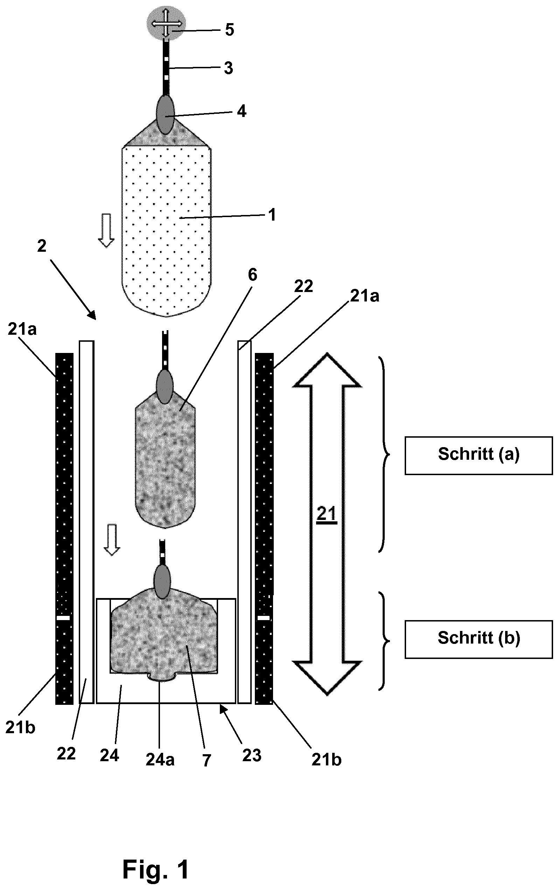

- **Figur 1**: eine schematisches Prozess-Schaubild zur Durchführung des erfindungsgemäßen Verfahrens,

Das Schaubild in **Figur 1** zeigt schematisch die Verfahrensschritte (a) und (b) mit einer Anordnung zur Herstellung eines vollzylindrischen Rohlings mittels des erfindungsgemäßen Verfahrens.

Zunächst wird ein vollzylindrischer Si02-Sootkörper 1, der nach dem VAD-Verfahren hergestellt ist und einer Trocknungsphase unterzogen wurde, einem Vakuumofen zugeführt, dem insgesamt die Bezugsziffer 2 zugeordnet ist. Der SiO₂-Sootkörper 1 mit einen Außendurchmesser von etwa 300 mm und einer Länge von etwa 2 m wird von oben in einen Vakuumofen 2 eingebracht, der eine Erhitzungszone 21 mit Heizelementen 21a, 21b aufweist, die um einen Suszeptor 22 angeordnet sind. Die Erhitzungszone 21 ist in einem Verglasungsabschnitt mit Heizelementen 21a und einem Umformabschnitt mit Heizelementen 21b getrennt ansteuerbar, so dass sich zwei unterschiedlich heiße Bereiche über die Länge des Suszeptors 22 einstellen lassen. Das untere Ende des Vakuumofens 2 wird von einer Schmelzform 23 ausgefüllt, die in ihrer Bodenplatte 24 eine muldenartige Vertiefung 24a aufweist.

Im ersten Verfahrensschritt (a) wird der Sootkörper 1 an einer Graphit-Kette 3 mit einem sogenannten Quarzglas-Handle 4 hängend und von einer Bewegungseinheit 5 gesteuert in die Verglasungszone des Ofens 2 eingebracht und darin auf eine Temperatur um 1400 °C aufgeheizt. Dabei wird im Vakuumofen 2 ein Unterdruck von weniger als 0,1 Pa (absolut) aufrechterhalten. Der vollzylindrische Sootkörper 1 sintert bzw. verglast dabei gleichmäßig von seiner äußeren Mantelfläche beginnend nach innen, so dass ein homogener, blasenfreier, transparenter Quarzglaskörper 6 mit einem Außendurchmesser von etwa 200 mm und einer Länge von etwa 1,5 m entsteht. Der vollzylindrische Quarzglaskörper 6 weist an seinem unteren Ende eine halbkugelförmige Kuppe auf, und bildet an seinem oberen Ende mit der Quarzglas-Handle 4 verschmolzen eine etwa kegelförmige Kuppe aus. Der Verglasungsschritt ist bei einer Verweildauer des Sootkörpers 1 von etwa 10 Stunden innerhalb der Erhitzungszone 21 abgeschlossen.

Daran schließt sich der Umformschritt (b) an. Der verglaste, vollzylindrische Quarzglaskörper 6 wird mit Hilfe der Graphit-Halterung 4 und der am oberen Ende wirkenden Bewegungseinheit 5 weiter nach unten auf die zentrisch angeordnete Mulde 24a in der Bodenplatte 24 der Schmelzform 23 abgesenkt. Die runde Kuppe am unteren Ende des Quarzglaskörpers 6 passt sich dabei gut in die muldenförmige Vertiefung 24a der Bodenplatte 24 ein. Gleichzeitig wird die Temperatur der Erhitzungszone 21 im Bereich der Schmelzform 23 mit einer Aufheizrate von 2,5 K/min von 1400 °C auf 1750 C erhöht. Dadurch erweicht der untere Bereich des Quarzglaskörpers 6, der in der Mulde 24a der Bodenplatte 24 in einer zentrischen Position gehalten wird, und fließt nach und nach in die Schmelzform 23 aus. Die Schmelzform 23 befindet sich vollständig innerhalb des unteren Bereichs der Erhitzungszone 21, so dass sich ein homogenes Temperaturprofil über die Höhe der Schmelzform 23 einstellt. Das Vakuum wird während des gesamten Verglasungs- und des Umformprozesses beibehalten.

Nach Abschluss dieser ersten Aufheiz- und Umformphase hat sich das Gewicht des auf der viskosen Quarzglasmasse 7 lastenden, noch nicht verformten Quarzglaskörpers 6 gegenüber dem Ausgangsgewicht etwa halbiert und es schließt sich eine zweite Umformphase an, die im Wesentlichen nur noch den restlichen, oberen Bereich des Quarzglaskörpers 6 betrifft. Dabei wird die Temperatur mit einer höheren Aufheizrate von 5 K/min weiter bis auf 1800 °C erhöht. Während dieser Aufheizphase erweicht auch der restliche obere Bereich des Quarzglaskörpers fast vollständig und fließt in die Schmelzform 23 aus, wobei deren Innenvolumen nahezu vollständig ausfüllt wird. Die Steuerung der Zuführung des Quarzglaskörpers 6 erfolgt so, dass die Graphit-Kette 3 immer unter leichter mechanischer Spannung gehalten bleibt. Die Graphit-Kette 3, die Handle 4 und der obere Bereich des Quarzglaskörpers bilden dabei eine gestreckte Anordnung. Hilfreich bei diesem Vorgang ist ein hier nicht dargestellter Kraftaufnehmer an der Graphit-Kette 3 oder in der Bewegungseinheit 5, der dafür sorgt, dass die Graphit-Kette 3 auf Spannung gehalten wird, indem die Graphit-Kette 3 nur so viel nachgibt, wie viskose Quarzglasmasse 7 aus dem Quarzglaskörper 6 umgeformt wird. Das Verhältnis der Anteile an erweichter Quarzglasmasse 7 und noch nicht erweichtem Quarzglaskörper 6 bestimmt die Zuführungsbewegung durch die Halteeinrichtung - bestehend aus der Graphit-Kette 3 und Handle 4 - in Kombination mit der Bewegungseinheit 5.

Ziel dieser beiden Umformphasen ist die Anpassung der Viskosität der Quarzglasmasse 7 innerhalb der Schmelzform 23 an das sich allmählich verringernde Gewicht des noch nicht umgeformten Teils des Quarzglaskörpers. Die definierte, langsame und vorsichtige Verringerung der Viskosität wirkt der Ausbildung von Schmelzfehlern, insbesondere Verwerfungen und schraubenförmigen Blasenringen, entgegen.

Im Anschluss daran wird in einer letzten Umformphase die vorher erreichte Temperatur von 1800 °C für weitere 20 Minuten gehalten. Dabei kommt es zu einer Glättung der Oberseite des umgeformten Quarzglasblocks und damit zu einer Reduzierung von Materialverlusten.

Nach dem Abkühlen wird die Schmelzform geöffnet und der Rohling in Form eines vollzylindrischen Quarzglasblocks wird entnommen. Zunächst wird am oberen Ende des Rohlings die Kuppe mit der Quarzglas-Handle 4 durch einen horizontalen Schnitt, der eine Stirnfläche des Rohlings bildet, entfernt. Weiterhin wird eine Oberflächenschicht an der unteren Stirnseite und am Umfang des Rohlings abgenommen. Dadurch wird insbesondere die Erhebung, die durch die Mulde in der Bodenplatte der Schmelzform entstand, entfernt. Die Planseiten werden poliert, so dass sich für den Rohling ein Durchmesser von 380 mm und eine Dicke von 200 mm ergibt Der Rohling zeichnet sich durch Blasenfreiheit, weitgehende Schlierenfreiheit und durch ein rotationssymmetrisches Eigenschaftsprofil hinsichtlich des Brechungsindexes und des OH-Gehaltes aus, wie es anfänglich durch die Abscheide- und andere vorhergehende Prozessparameter festgelegt wurde. Der Rohling ist insbesondere für die Herstellung von Quarzglasbauteilen für die Optik oder für die Halbleiterfertigung geeignet - wie etwa Flansche und Waferträger.

## Patentansprüche

1. Verfahren zur Herstellung eines optischen Rohlings aus synthetischem Quarzglas durch Verglasen und Umformen eines porösen, eine Längsachse (L) aufweisenden, zylinderförmigen SiO₂ Sootkörpers (1) in einer eine Schmelzform (23) mit Bodenplatte (24) aufweisenden Erhitzungszone (21), umfassend folgende Verfahrensschritte:
(a) Verglasen des SiO₂₋Sootkörpers (1) in der Erhitzungszone (21) bei einer Verglasungstemperatur unter Bildung eines vollzylindrischen, vollständig verglasten, transparenten Quarzglaskörpers (6), und anschließend
(b) Umformen des verglasten Quarzglaskörpers (6) durch Erweichen in der Schmelzform (23) bei einer Erweichungstemperatur unter Bildung einer viskosen Quarzglasmasse (7), welche das Volumen der Schmelzform (23) ganz oder teilweise ausfüllt, und
(c) Abkühlen der Quarzglasmasse (7) und Entnahme aus der Schmelzform (23) unter Bildung des optischen Rohlings,
**dadurch gekennzeichnet, dass** beim Umformen in der Schmelzform (23) gemäß Verfahrensschritt (b) der vollzylindrische Quarzglaskörper (6) durch gesteuertes Zuführen mit einem Zentrierungsmittel der Bodenplatte (24) in Kontakt gebracht wird.

2. Verfahren nach Anspruch 1, **dadurch gekennzeichnet, dass** das Zentrierungsmittel der Bodenplatte als eine rotationssymmetrische Mulde (24a) ausgebildet ist.

3. Verfahren nach Anspruch 1 oder 2, **dadurch gekennzeichnet, dass** das gesteuerte Zuführen in die Schmelzform (23) mittels einer am oberen Ende des verglasten Quarzglaskörpers (6) angreifenden Haltevorrichtung (3; 4) in Kombination mit einer Bewegungseinheit (5) erfolgt.

4. Verfahren nach Anspruch 3, **dadurch gekennzeichnet, dass** der verglaste Quarzglaskörper (6) in der Schmelzform (23) mit seinem unteren Ende beginnend von unten nach oben umgeformt wird, wobei die Zuführung so gesteuert ist, dass eine pro Zeiteinheit zugeführte Masse des Quarzglaskörpers (6) der pro Zeiteinheit erweichenden Quarzglasmasse (7) entspricht.

5. Verfahren nach einem der vorhergehenden Ansprüche, **dadurch gekennzeichnet, dass** der verglaste Quarzglaskörper (6) zum Umformen mit einer Vorschubgeschwindigkeit im Bereich zwischen 2 und 5 mm/min mit dem Zentrierungsmittel der Bodenplatte (24) in Kontakt gebracht wird und dass die Erweichungstemperatur im Bereich zwischen 1650 °C und 1850 °C eingestellt wird .

6. Verfahren nach einem der vorhergehenden Ansprüche, **dadurch gekennzeichnet, dass** das Umformen des vollzylindrischen Quarzglaskörpers (6) mit im Wesentlichen konstanter Erweichungstemperatur während einer Zeitspanne von 15 min bis 200 min erfolgt.

7. Verfahren nach einem der vorhergehenden Ansprüche, **dadurch gekennzeichnet, dass** das Umformen in einem Teilbereich der Erhitzungszone (21) erfolgt, deren Länge maximal die Hälfte der Länge des umzuformenden vollzylindrischen Quarzglaskörpers (6) beträgt.

8. Verfahren nach einem der vorhergehenden Ansprüche , **dadurch gekennzeichnet, dass** der poröse SiO₂-Sootkörper (1) ein vollzylindrischer Sootkörper ist, der nach dem VAD-Verfahren hergestellt wurde.

9. Verfahren nach einem der vorhergehenden Ansprüche, **dadurch gekennzeichnet, dass** beim Verglasen nach Verfahrensschritt (a) die Erhitzungszone (21) auf den Sootkörper (1) in vertikaler Orientierung seiner gesamten Länge einwirkt.

10. Verfahren nach einem der vorhergehenden Ansprüche 1 bis 8, **dadurch gekennzeichnet, dass** der Sootkörper (1) in vertikaler Orientierung seiner Längsachse (L) zonenweise mit seinem unteren Ende beginnend von unten nach oben verglast wird.

11. Verfahren nach Anspruch 10, **dadurch gekennzeichnet, dass** der Sootkörper (1) beim zonenweisen Verglasen mit einer Vorschubgeschwindigkeit im Bereich zwischen 2 und 10 mm/min der Erhitzungszone (21) zugeführt wird.

12. Verfahren nach einem der vorhergehenden Ansprüche, **dadurch gekennzeichnet, dass** die Verglasungstemperatur im Bereich zwischen 1200 °C und 1600 °C eingestellt wird.

## Claims

1. A method for producing an optical blank from synthetic quartz glass by vitrifying and shaping a porous, cylindrical SiO₂ soot body (1) having a longitudinal axis (L), in a heating zone (21) comprising a melt mold (23) with bottom plate (24), comprising the following method steps:
(a) vitrifying the SiO₂ soot body (1) in the heating zone (21) at a vitrification temperature so as to form a fully cylindrical, completely vitrified, transparent quartz glass body (6), and subsequently
(b) shaping the vitrified quartz glass body (6) by softening in the melt mold (23) at a softening temperature so as to form a viscous quartz glass mass (7) which fully or partly fills the volume of the melt mold (23), and
(c) cooling the quartz glass mass (7) and removal from the melt mold (23) so as to form the optical blank,
**characterized in that** during shaping in the melt mold (23) according to method step (b) the fully cylindrical quartz glass body (6) is brought into contact by way of controlled supply with a centering means of the bottom plate (24).

2. The method according to claim 1, **characterized in that** the centering means of the bottom plate is configured as a rotation-symmetrical trough (24a).

3. The method according to claim 1 or 2, **characterized in that** the controlled supply into the melt mold (23) is carried out by means of a holding device (3; 4) acting on the upper end of the vitrified quartz glass body (6), in combination with a movement unit (5).

4. The method according to claim 3, **characterized in that** the vitrified quartz glass body (6) is shaped in the melt mold (23), starting with the lower end thereof, from the bottom to the top, wherein the supply is controlled such that a mass of the quartz glass body (6) supplied per time unit corresponds to the quartz glass mass (7) softened per time unit.

5. The method according to any one of the preceding claims, **characterized in that** the vitrified quartz glass body (6) is brought into contact with the centering means of the bottom plate (24) for shaping at a feed rate in the range between 2 and 5 mm/min, and that the softening temperature is adjusted in the range between 1650°C and 1850°C.

6. The method according to any one of the preceding claims, **characterized in that** the fully cylindrical quartz glass body (6) is shaped at a substantially constant softening temperature for a period of time of 15 min to 200 min.

7. The method according to any one of the preceding claims, **characterized in that** shaping is carried out in a sub-area of the heating zone (21), the length of which is not more than half the length of the fully cylindrical quartz glass body (6) to be shaped.

8. The method according to any one of the preceding claims, **characterized in that** the porous SiO₂ soot body (1) is a fully cylindrical soot body that was produced according to the VAD method.

9. The method according to any one of the preceding claims, **characterized in that** during vitrification according to method step (a) the heating zone (21) acts on the soot body (1) in a vertical orientation of its entire length.

10. The method according to any one of the preceding claims 1 to 8, **characterized in that** the soot body (1) is vitrified in vertical orientation of its longitudinal axis (L) zonewise, starting with its lower end, from the bottom to the top.

11. The method according to claim 10, **characterized in that** the soot body (1) is supplied during zonewise vitrification at a feed rate in the range between 2 and 10 mm/min to the heating zone (21).

12. The method according to any one of the preceding claims, **characterized in that** the vitrification temperature is adjusted in the range between 1200°C and 1600°C.

## Revendications

1. Procédé de fabrication d'une ébauche optique en verre de quartz synthétique par vitrification et formage d'un corps de suie de SiO₂ (1) poreux, cylindrique et présentant un axe longitudinal (L) dans une zone de réchauffement (21) présentant un moule de fusion (23) doté d'une plaque de fond (24), comprenant les étapes de procédé suivantes :
(a) vitrification du corps de suie de SiO₂ (1) dans la zone de réchauffement (21) à une température de vitrification, avec formation d'un corps de verre de quartz (6) transparent, entièrement vitrifié et en forme de cylindre plein, puis
(b) formage du corps de verre de quartz (6) vitrifié par ramollissement dans le moule de fusion (23) à une température de ramollissement, avec formation d'une masse de verre de quartz (7) visqueuse, qui remplit entièrement ou partiellement le volume du moule de fusion (23), et
(c) refroidissement de la masse de verre de quartz (7) et retrait du moule de fusion (23), avec formation de l'ébauche optique,
**caractérisé en ce que**, lors du formage dans le moule de fusion (23) selon l'étape de procédé (b), le corps de verre de quartz (6) en forme de cylindre plein est amené en contact avec un moyen de centrage de la plaque de fond (24) par acheminement commandé.

2. Procédé selon la revendication 1, **caractérisé en ce que** le moyen de centrage de la plaque de fond se présente sous la forme d'un creux (24a) à symétrie de révolution.

3. Procédé selon la revendication 1 ou 2, **caractérisé en ce que** l'acheminement contrôlé dans le moule de fusion (23) est effectué au moyen d'un dispositif de retenue (3 ; 4) saisissant l'extrémité supérieure du corps de verre de quartz (6) vitrifié en combinaison avec une unité de déplacement (5).

4. Procédé selon la revendication 3, **caractérisé en ce que** le corps de verre de quartz (6) vitrifié est formé dans le moule de fusion (23) de bas en haut en commençant par son extrémité inférieure, l'acheminement étant contrôlé de telle manière qu'une masse du corps de verre de quartz (6) acheminée par unité de temps correspond à la masse de verre de quartz (7) ramollissant par unité de temps.

5. Procédé selon l'une des revendications précédentes, **caractérisé en ce que**, pour le formage, le corps de verre de quartz (6) vitrifié est amené en contact avec le moyen de centrage de la plaque de fond (24) à une vitesse d'avance comprise dans la plage de 2 à 5 mm/min et **en ce que** la température de ramollissement est réglée dans la plage de 1650 °C à 1850 °C.

6. Procédé selon l'une des revendications précédentes, **caractérisé en ce que** le formage du corps de verre de quartz (6) en forme de cylindre plein est effectué à une température de ramollissement sensiblement constante pendant une période de temps de 15 min à 200 min.

7. Procédé selon l'une des revendications précédentes, **caractérisé en ce que** le formage est effectué dans une région partielle de la zone de réchauffement (21), dont la longueur correspond à maximum la moitié de la longueur du corps de verre de quartz (6) en forme de cylindre plein à former.

8. Procédé selon l'une des revendications précédentes, **caractérisé en ce que** le corps de suie de SiO₂ (1) poreux est un corps de suie en forme de cylindre plein, qui a été fabriqué selon le procédé de *dégazage à l'arc sous vide.*

9. Procédé selon l'une des revendications précédentes, **caractérisé en ce que**, lors de la vitrification selon l'étape de procédé (a), la zone de réchauffement (21) agit sur le corps de suie (1) dans une orientation verticale de toute sa longueur.

10. Procédé selon l'une des revendications précédentes 1 à 8, **caractérisé en ce que** le corps de suie (1) est vitrifié dans une orientation verticale de son axe longitudinal (L) par zones de bas en haut en commençant par son extrémité inférieure.

11. Procédé selon la revendication 10, **caractérisé en ce que**, lors de la vitrification par zones, le corps de suie (1) est acheminé dans la zone de réchauffement (21) à une vitesse d'avance comprise dans la plage de 2 à 10 mm/min.

12. Procédé selon l'une des revendications précédentes, **caractérisé en ce que** la température de vitrification est réglée dans la plage de 1200 °C à 1600 °C.
